# EUROPEAN PATENT SPECIFICATION

(11) **EP 0 306 512 B1**
(45) Date of publication and mention of the grant of the patent: **31.03.1993**
(21) Application number: 88902633.2
(22) Date of filing: 25.01.1988
(51) Int. Cl.: H01S 3/23, G02F 1/35

(54) **IMPROVED MASTER-OSCILLATOR POWER-AMPLIFIER LASER SYSTEM**
HAUPTOSZILLATOR-LEISTUNGSVERSTÄRKER-LASERSYSTEM
SYSTEME LASER AMELIORE A AMPLIFICATEUR DE PUISSANCE A OSCILLATEUR PRINCIPAL

(30) Priority: 26.03.1987 US 30320
(43) Date of publication of application: 15.03.1989
(73) Proprietor: Hughes Aircraft Company, Los Angeles, California 90045-0066 (US)
(72) Inventor: O'MEARA, Thomas, R., Malibu, CA 90265 (US)
(74) Representative: KUHNEN, WACKER & PARTNER
(86) International application number: US8800249
(87) International publication number: WO8807778

(56) References cited:
- Soviet Journal of Quantum Electronics, vol. 17, no. 1, January 1987 (New York, US), I.Yu. Anikeev et al.:"Effective decoupling method for a laser system with wavefront reversal", pages 124 -126
- Applied Physics B. Photophysics and Laser Chemistry, vol B36, No.2,February 1985 (Berlin, DE) I.D. Carr et al.: "Performance of a Nd-YAG oscillator/amplifier with phase conjugation via stimulated Brillouinscattering", pages 83-92
- Optics Letters, vol. 11, no. 3, March 1986, (New York), US), D.A. Rockwell et al.: "Coherent coupling of laser gain media using phase conjugation", pages 147-149
- Applied Physics B. Photophysics and Laser Chemistry, vol. B39, no. 4, April 1986 (Berlin, DE) V. Michau et al.: "Tunable and highenergy-Q-switched operation of an Alexandrite slave ring laser", pages 219-222
- Soviet Journal of Quantum Electronics, vol. 15,no.10, October 1985 (Woodbury, New York, US) L.I. Zykov et al.: "Feasibility of increasing the maximum gain of an optical quantum amplifier", pages 1420-1421

## Description

### BACKGROUND OF THE INVENTION

The present invention relates generally to laser systems, and more particularly to master-oscillator power-amplifier laser systems which include distortion-compensating phase conjugate mirrors.

A high-power laser beam can be obtained by using a master-oscillator power-amplifier ("MOPA") laser system having an oscillator to provide a laser beam and a power amplifier to amplify the beam. However, such an amplifier introduces distortion as it amplifies, and it is necessary to compensate for this distortion in order to provide an output beam of acceptably high quality. One way of compensating for such distortion is to use phase conjugation means such as a phase conjugate mirror.

A phase conjugate mirror receives an input laser beam and provides a "reflected" beam which is a conjugate of the received beam. If the received beam has been distorted by propagation through a distorting medium en route to the phase conjugate mirror, and if the "reflected" conjugate beam is then directed back through the distorting medium, a substantial portion of the distortion vanishes and the conjugate beam emerges, essentially distortion-free, from the distorting medium.

A high-power laser system which uses phase conjugation to compensate for amplifier distortion includes a laser oscillator to provide a laser beam, a power amplifier, a beam splitter to reflect a portion of the beam from the oscillator into the amplifier, and a phase conjugate mirror to receive the amplified beam from the amplifier and to reflect a conjugate beam back through the amplifier. As the conjugate beam goes back through the amplifier, it is further amplified and then passed through the beam splitter to provide a high-power output laser beam. Any distortion introduced into the beam during amplification is removed when the conjugate beam goes back through the amplifier, and accordingly the output laser beam is virtually distortion-free.

The laser oscillator which provides the input beam comprises an amplifying medium disposed between a reflector and an opposing partial reflector. The input beam emerges from the partial reflector and propagates from there toward the beam splitter.

The phase conjugate mirror may comprise a stimulated brillouin scattering ("SBS") mirror. Unlike other kinds of phase conjugate mirrors, SBS mirrors require no "pumps" or other external power supplies and hence are relatively efficient. However, a typical SBS mirror reflects no more than 60% to 80% of the power it receives, and it is therefore necessary to use a very high gain amplifier to make up for this loss and provide the desired high-power output beam. For these reasons, an amplifier having a gain of 200 or more may be required.

Although a MOPA laser system as described, including a high-gain amplifier that offsets losses in the SBS mirror, can provide a well-compensated high-power laser beam, such a system can become unstable. This instability results from the fact that the beam splitter does not pass all of the amplified conjugate beam through to the output. Instead, a portion of this amplified beam is reflected back toward the partial reflector of the oscillator, from whence the beam is reflected back through the splitter toward the amplifier for a second round trip through the amplifier and the SBS mirror. In other words, the combination of the amplifier, the SBS mirror, and the partial reflector constitutes an oscillator. If the round-trip gain through this combination exceeds unity, oscillation occurs, and if the amplifier gain is high enough this unwanted oscillation not only prevents the system from operating as desired but can physically destroy some of the components.

This unwanted oscillation can theoretically be prevented by means of polarizing devices. In one such polarizing device, the input beam is polarized by Brewster windows in the laser oscillator and the polarized beam is then oriented to a desired orientation by a half-wave plate. A polarization-separating beam splitter receives the polarized input beam from the half-wave plate and directs it into the amplifier. A quarter-wave plate between the amplifier and the SBS mirror rotates the polarization of the beam as it passes between the amplifier and the SBS mirror such that, after the return pass through the amplifier, the amplified conjugate beam is orthogonally polarized with respect to the input beam. The polarization-separating beam splitter then directs the amplified beam to the output.

If the polarization of the amplified beam is kept perfectly orthogonal with respect to the polarization of the input beam, no undesired oscillation can occur because only a very small percentage of the amplified beam gets reflected back toward the partial reflector of the oscillator when high quality polarizers are used. However, even a very slight birefringence in the amplifier or in any other system element can depolarize the beam enough to result in oscillation. A depolarization as small as 1% in a system having an amplifier with a gain of 200 can lead to unwanted oscillation.

Another problem is presented by amplified spontaneous emissions ("ASE") originating in and amplified by the amplifier which are reflected by the SBS mirror and then, in passing back through the amplifier, are further amplified. Since the ASE are initially unpolarized, about half of the ASE will be directed by the beam splitter toward the oscillator. Any ASE entering the oscillator can degrade the performance of the oscillator and may even quench the oscillator entirely.

From the Soviet Journal of Quantum Electronics Vol. 17, No. 1, January 1987, a method is known for decoupling a master oscillator from the opposite light wave reflected by a wave front reversing mirror and transmitted through an amplifier. According to the proposed method a feedback is established in the laser resonator between the laser radiation proper and the opposite wave crossing the resonator. This is done by using a master oscillator in the form of a laser with an unstable ring resonator operating in the travelling wave regime. Comparable laser resonator configurations have been used earlier for example for self-mode-locked lasers. The unstable resonator configuration, which ensures unidirectional lasing of the oscillating ring laser, is established by a thermal lens induced in the active element. The outcoupled beam is guided through an STBS cell and is reflected by a wavefront reversing mirror. The back-scattered light enters the ring resonator again, passes through the amplifying media of the oscillator system and is then outcoupled by means of a beam splitter being placed inside the ring resonator cavity.

It will be apparent from the foregoing that there is a need for a means to prevent undesired oscillation in a MOPA laser system having a distortion-compensating phase conjugate mirror, and to prevent any ASE which may be present in the output of such a system from degrading the system oscillator.

This object is solved by a master oscillator power-amplifier (MOPA) in accordance with Claim 1.

In more detail, the present invention provides a stable phase conjugate master-oscillator power-amplifier ("MOPA") laser system that provides an undistorted high-power output laser beam. Stability is achieved by preventing feedback between the power amplifier and the oscillator. In addition, the introduction of amplified spontaneous emissions ("ASE") into the oscillator is inhibited, thereby avoiding degradation of the oscillator. A MOPA system according to the present invention can operate at a very high power level without suffering either from instability and resulting unwanted oscillation or from ASE-induced oscillator degradation.

The present invention resides in an improved MOPA laser system including an optical oscillator to provide an input laser beam having a predetermined frequency, a beam splitter to receive the beam from the oscillator, a power amplifier to receive a portion of the beam from the beam splitter and amplify the beam, and a phase conjugating reflector such as an SBS mirror to reflect the amplified portion of the beam back through the power amplifier and thence through the beam splitter to provide an amplified output beam. The improved oscillator means of this invention prevents unwanted destabilizing feedback by rejecting any of the output beam which propagates back toward the oscillator means. ASE-induced oscillator degradation is prevented by attenuation means which attenuates any ASE which may be transmitted from the amplifier back toward the oscillator.

The improved oscillator may include a ring oscillator having an amplifying medium with an input for receiving a laser beam and a plurality of reflectors to reflect the beam along a ring path around the medium for further amplification. One of the reflectors provides the input beam by transmitting a portion of the beam out of the ring path and along an input path toward the beam splitter, and this reflector is oriented to reflect away any of the output beam that might propagate back along the input path toward the oscillator. An optical isolator, such as a Bragg cell isolator or a magneto-optic "Faraday" isolator may be located along the ring path in the oscillator to attenuate any of the output beam which might enter the oscillator and propagate backwardly along the ring path.

A MOPA system may include polarizing means to polarize the input beam and polarity rotation means disposed between the power amplifier and the reflector to rotate the polarity of the beam such that the polarity of the output beam is orthogonal to that of the input beam. The beam splitter in such a system comprises a polarization separating beam splitter. In a MOPA system including such polarizing features and improved according to the present invention, the improved oscillator includes means for polarizing the input beam to cooperate with the polarization separating beam splitter and the polarity rotation means, thereby substantially preventing the degradation of the oscillator due to impingement of unwanted radiation on the oscillator.

ASE which originates in the amplifier is reflected by the SBS mirror along with the amplified oscillator beam and is further amplified on the return pass through the amplifier. Since the ASE is not polarized, even a polarization separating beam splitter will reflect some of the ASE back toward the oscillator, and if the ASE enters the oscillator it degrades the performance of the oscillator. The attenuation means reduces such degradation by attenuating the ASE.

In the present invention the attenuation means may include a spatial filter, such as a filter comprising two lenses and an aperture, the filter being disposed along the input path and operative to attenuate the ASE.

The attenuation means may also include an optical isolator to attenuate the ASE. The isolator may comprise a filter, such as a band pass filter, a notch filter, or a high pass filter, disposed between the oscillator and the beam splitter, or a filter such as a band pass filter disposed between the power amplifier and the reflector.

In a MOPA system having an SBS mirror, the action of the optical isolator may be enhanced by taking advantage of a frequency shift introduced by such a mirror. An SBS mirror, in response to an incident beam of a certain frequency, provides a conjugate beam having a frequency which differs from the frequency of the incident beam by a predetermined amount. In a MOPA system, this means that the conjugate beam provided by the SBS mirror has a frequency which differs from the frequency of the oscillator beam by the above referenced predetermined amount. Since any ASE generated in the amplifier occupies a band of frequencies centered around the oscillator frequency, the ASE frequencies are also shifted by the SBS mirror to a new band centered around the frequency of the conjugate beam. An isolator disposed between the oscillator and the power amplifier can take advantage of this frequency shift and remove the ASE without disturbing the oscillator beam.

Specifically, an improved MOPA system according to the invention includes an isolator which is operative to transmit a beam having a frequency equal to that of the input beam and to attenuate a beam having a frequency equal to that of the conjugate beam. This isolator comprises a filter disposed between the oscillator and the amplifier. The oscillator beam passes through the filter with little or no attenuation, but any ASE which is reflected from the amplifier back toward the oscillator is attenuated because the frequencies of the ASE have all been shifted by the SBS mirror into a band centered around the frequency of the conjugate beam. A second filter, disposed between the amplifier and the SBS mirror, further attenuates the ASE.

It will be appreciated from the foregoing that the present invention represents a significant advance in the field of high-power laser systems. The invention provides a stable phase conjugate MOPA system which outputs a high-power low-distortion output laser beam. The system includes an improved oscillator which does not provide a feedback path between the oscillator and the power amplifier and which is not subject to degradation by ASE.

Other aspects and advantages of the present invention will become apparent from the following detailed description which, when taken in conjunction with the accompanying drawings, illustrates by way of example the principles of the invention.

### BRIEF DESCRIPTION OF THE DRAWINGS

FIG. 1 is a schematic diagram of a basic compensated master-oscillator power-amplifier laser system.

FIG. 2 is a schematic diagram of an improved compensated master-oscillator power-amplifier laser system according to the present invention.

FIG. 3 is a graph showing distribution as a function of frequency of amplified stimulated emissions in a laser beam after the beam has been amplified but before it has entered the phase conjugator of FIG. 1 (solid curve) and after the frequency of the beam has been shifted as a result of passage through the phase conjugator (dashed curve).

FIG. 4 is a graph showing attenuation as a function of frequency by a band pass filter which can be used for optical isolation in the embodiment of FIG. 2.

FIG. 5 is a graph showing attenuation as a function of frequency by a notch filter which can be used for optical isolation in the embodiment of FIG. 2.

FIG. 6 is a graph showing attenuation as a function of frequency by a high pass filter which can be used for optical isolation in the embodiment of FIG. 2.

### DESCRIPTION OF THE PREFERRED EMBODIMENT

Existing phase conjugate master-oscillator power-amplifier ("MOPA") laser systems are subject to unwanted oscillation as a result of feedback between the oscillator and the power amplifier and oscillator degradation as a result of amplified spontaneous emissions ("ASE") reflected into the oscillator. The present invention provides a stable phase conjugate MOPA system that provides a high-power, low-distortion laser beam which is not subject to unwanted oscillation or to ASE-induced oscillator degradation.

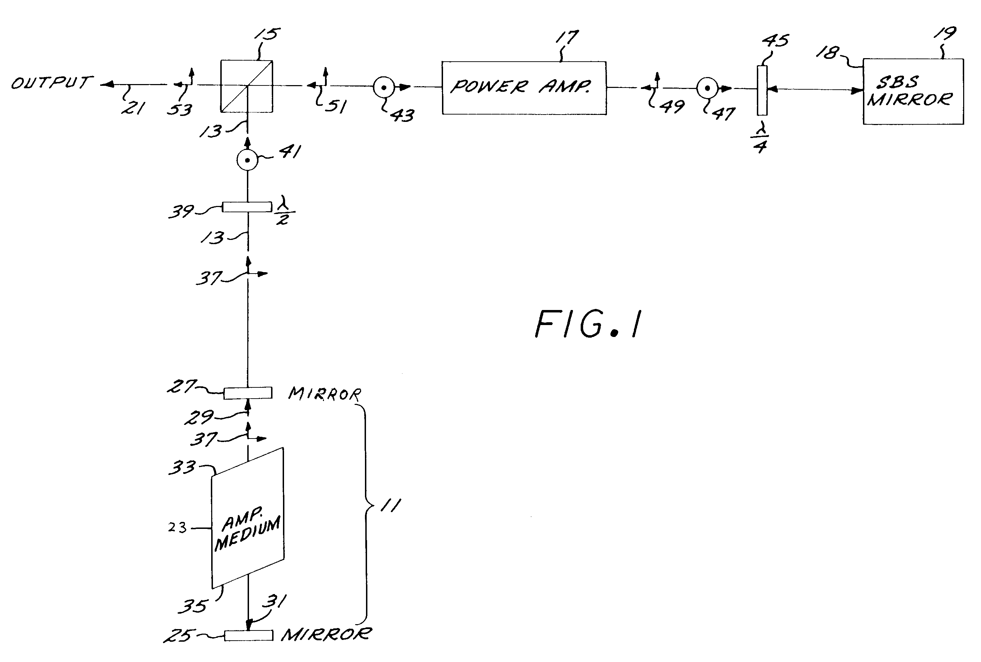

FIG. 1 is an illustration of a basic MOPA system, illustrating the paths of light energy and the basic components. These components include oscillator means 11 to provide along an input path 13 an input laser beam of predetermined frequency, a beam splitter 15 to receive the beam from the oscillator means 11, a power amplifier 17 to receive the beam from the beam splitter 15 and amplify the beam, and a reflector 18 that may comprise an SBS mirror 19 or another kind of phase conjugate reflector, as shown in FIG. 1. The reflector 19 reflects the beam back through the amplifier 17 and thence through the beam splitter 15 to provide an amplified output beam along an output path 21.

The oscillator means 11 includes an amplifying medium 23 disposed between opposing reflectors 25 and 27. A laser beam generated in the oscillator means 11 is reflected back and forth between the reflectors 25 and 27 as indicated generally by arrows 29 and 31. The reflector 27 is partially reflecting and is oriented to transmit a portion of the generated laser beam along the input path 13 to constitute the input laser beam.

Oscillation can occur between the oscillator means 11 and the amplifier 17 because some of the output beam is reflected by the beam splitter 15 back along the input path 13. This reflected beam is re-reflected back toward the amplifier by the mirror 27, and in this way the beam travels back and forth between the mirror 27 and the reflector 18, passing through the amplifier on each trip. If the round-trip gain exceeds unity, oscillation occurs.

The oscillator means 11 may include Brewster windows 33 and 35 adjacent opposing ends of the medium 23 to polarize the input beam as indicated by a polarization symbol 37. A half-wave plate 39 disposed along the input path 13 receives the polarized beam and rotates the polarization of the beam as indicated by a polarization symbol 41. The beam splitter 15 may comprise a polarization separating beam splitter that reflects the polarized beam toward the amplifier 17 as indicated by a polarization symbol 43. Polarity rotation means 45, such as a quarter-wave plate, receives the amplified beam as indicated by a polarity symbol 47 from the amplifier 17 and rotates the polarity of the amplified beam.

The SBS mirror 19 is responsive to the rotated beam to provide a beam that is a conjugate thereof and that has a frequency that has been shifted from the predetermined frequency by a shift amount. The conjugate beam is directed back through the polarity rotation means 45 whereby the polarity thereof is further rotated to provide a beam having a polarity orthogonal to the polarity of the input beam as indicated by a polarity symbol 49, thence back through the amplifier 17 as indicated by a polarity symbol 51 and the beam splitter 15 to provide an amplified output beam along the output path 21, as indicated by a polarity symbol 53.

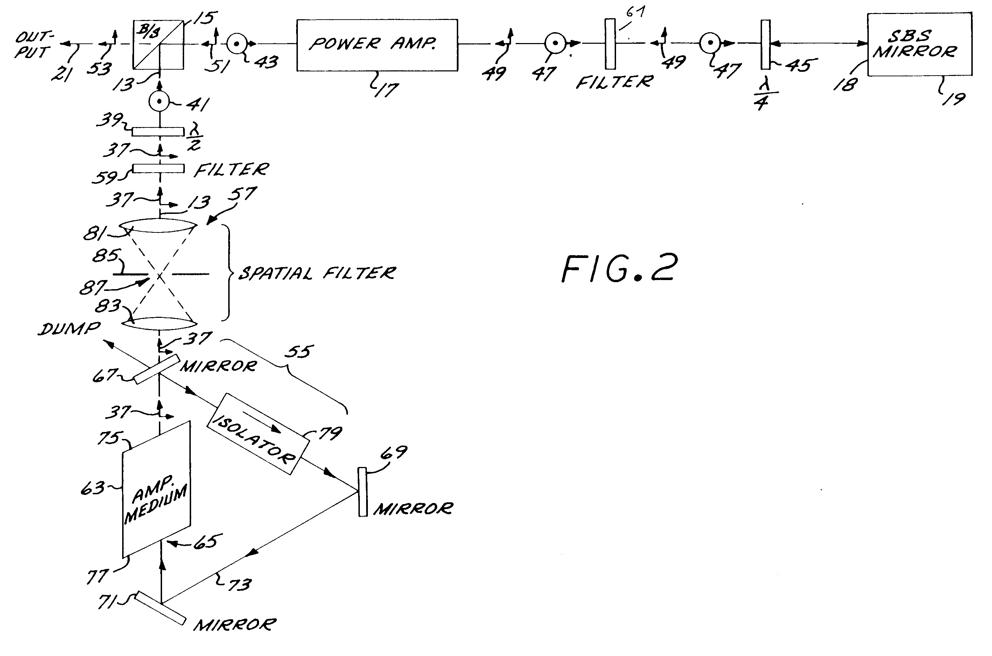

An improved MOPA laser system according to the present invention provides a stable phase conjugate MOPA system that is not subject to unwanted oscillation or to ASE-induced oscillator degradation, as exemplified in FIG. 2. Such an improved laser system is similar in some respects to the system previously described and illustrated in FIG. 1, and for convenience components in FIG. 2 that are similar to components in FIG. 1 are assigned the same reference numerals whereas improved or changed components are assigned different reference numerals.

An improved MOPA system according to the present invention includes improved oscillator means 55 operative to prevent feedback between the oscillator means 55 and the power amplifier 17. Also provided are attenuation means which may comprise a spatial filter 57 or a filter 59 disposed along the input path 13, or a filter 61 disposed between the amplifier 17 and the reflector 18, to prevent any ASE from degrading the performance of the oscillator means 55. This improved MOPA system provides a high-power, low-distortion output laser beam without oscillator degradation or unwanted oscillation between the amplifier 17 and the oscillator means 55.

The improved oscillator means 55 prevents feedback by rejecting any of the output beam that propagates back along the input path 13 toward the oscillator means 55. Specifically, in a MOPA of the kind illustrated in FIG. 1, any of the output beam that is reflected by the beam splitter 15 back toward the oscillator means 11 will be re-reflected by the mirror 27 back toward the power amplifier 17, thereby establishing a feedback loop between the mirror 27 and the reflector 18. In an improved MOPA according to the present invention, the improved oscillator means 55 does not re-reflect the output beam back toward the power amplifier 17. Accordingly there is no comparable feedback loop and unwanted oscillation does not occur.

More particularly, the improved oscillator means 55 includes a ring oscillator comprising an amplifying medium 63 having an input 65 for receiving a forwardly propagating laser beam and operative to amplify the received beam; and a plurality of reflector means 67, 69 and 71, disposed to receive the amplified beam from the medium 63 and operative to reflect the beam forwardly along a ring path 73 around the medium 63 and back into the input 65 for further amplification, one of the reflector means 67 being operative to provide the input beam by transmitting a portion of the amplified beam along the input path 13 toward the beam splitter 15 and to reject any of the output beam that propagates back along the input path 13 by reflecting said output beam away from the input path. The unwanted output beam may be reflected into an absorbing dump (not shown).

The medium 63 may comprise polarizing means such as Brewster windows 75 and 77 to provide a polarized beam as indicated by the polarity symbol 37. The ring oscillator may further comprise an optical isolator 79 disposed to receive a beam propagating along the ring path 73 and operative to attenuate any of the output beam that propagates back along the input path 13 into the oscillator and thence backwardly around the ring path 73. The isolator 79 may comprise a Bragg cell isolator or a magneto-optic "Faraday" isolator.

ASE may originate in the power amplifier 17. This ASE passes through the amplifier 17 and is reflected by the reflector 18 along with the input beam. The reflected ASE is further amplified on its return pass through the amplifier 17. Since the ASE is not polarized, the beam splitter 15 will reflect some of the ASE back toward the oscillator means 55 even if the beam splitter comprises a polarization separating beam splitter. Any ASE that enters the oscillator means 55 degrades the oscillator performance. The attenuation means provided in an improved MOPA system according to the present invention reduces such degradation by attenuating the ASE before it can reach the oscillator means 55.

In particular, the attenuation means comprises the spatial filter 57 disposed along the input path 13 and operative to attenuate the ASE before it can reach the oscillator means 55. The spatial filter 57 comprises two lenses 81 and 83 and aperture means 85 such as an aperture plate having therein an aperture 87 and disposed between the lenses 81 and 83 whereby a beam propagating along the input path 13 is focused through the aperture 87 by one of the lenses and back onto the input path by the other lens.

The spatial filter 57 exploits the fact that the total ASE power captured by a given cross sectional area is proportional to the field of view of said area, and the lenses 81 and 83 and the size of the aperture 87 are selected to maximize the attenuation of the ASE without significantly attenuating the input beam provided by the oscillator means 55.

The attenuation means may also include an optical isolator to attenuate the ASE. The isolator may comprise the filter 59 disposed between the oscillator means 55 and the beam splitter 15. The filter 59 may comprise a band pass filter, a notch filter, or a high pass filter. Alternatively, the isolator may comprise the filter 61, such as a band pass filter, disposed between the power amplifier 17 and the reflector 18. Such an optical isolator attenuates any ASE reflected toward the oscillator means 55 by the beam splitter 15.

A frequency shift introduced by the SBS mirror 19 may be used to advantage by the filter 59 in attenuating the ASE. An SBS mirror, in response to an incident beam of a certain frequency, shifts the frequency thereof as part of its "reflection" process whereby the SBS mirror provides a conjugate beam having a frequency that differs from the frequency of the incident beam by a predetermined amount. In other words, the conjugate beam provided by the SBS mirror 19 has a frequency that differs from the frequency of the input beam by the above referenced predetermined amount.

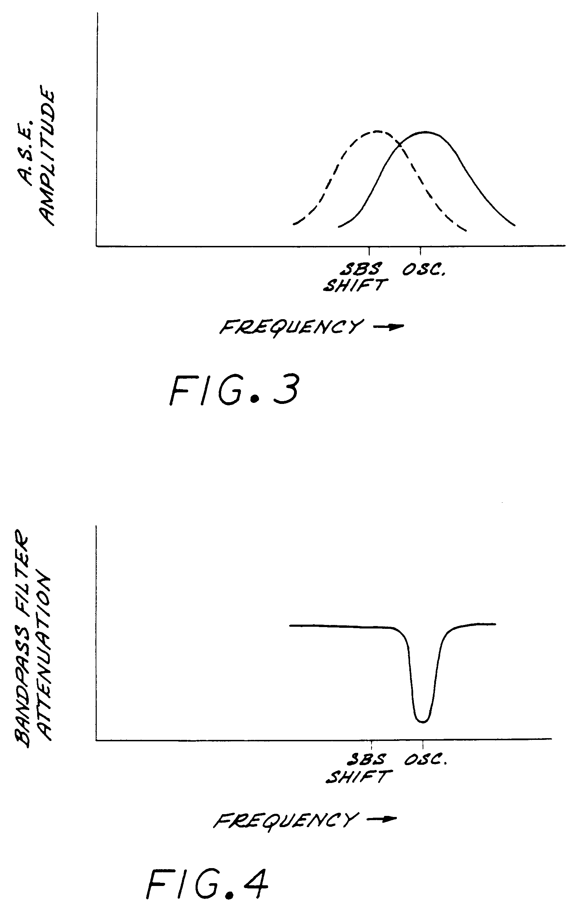

Since any ASE generated in the amplifier 17 occupies a band of frequencies centered around the frequency of the input beam, as generally represented by a solid curve 89 in FIG. 3, the SBS mirror 19 shifts the ASE frequencies along with the input beam frequency. The result is a conjugate beam having a frequency that differs from the frequency of the input beam by the predetermined amount and a set of conjugate ASE frequencies occupying a shifted frequency band centered around the frequency of the conjugate beam, as represented by a dashed curve 91. The filter 59 takes advantage of this frequency shift to attenuate the ASE without disturbing the input beam.

Specifically, the filter 59 is operative to transmit a beam having a frequency equal to that of the input beam and to attenuate a beam having a frequency equal to that of the conjugate beam. Accordingly, the input beam from the oscillator means 55 passes through the filter 59 with little or no attenuation, but any ASE that is reflected from the amplifier 17 back toward the oscillator means 55 is attentuated because the frequencies of the ASE have all been shifted by the SBS mirror 19 into a band centered around the frequency of the conjugate beam.

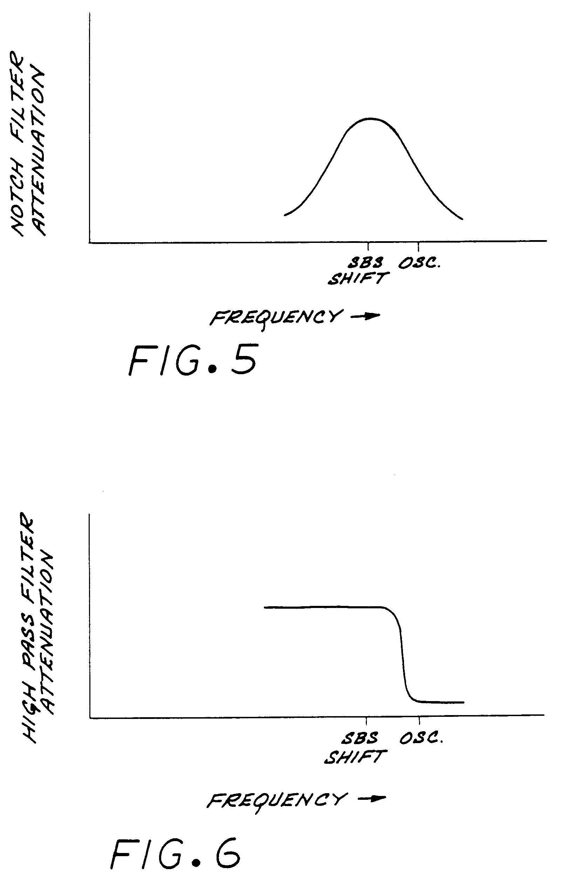

The filter 59 may comprise a bandpass filter, operative to transmit a narrow band of frequencies centered around the frequency of the oscillator, as depicted in FIG. 4, or the filter 59 may comprise a notch filter, operative to attenuate a band of frequencies corresponding with the shifted frequencies of the ASE, as depicted in FIG. 5. If the shifted ASE frequencies are lower than the oscillator frequency, then a high pass filter, as depicted in FIG. 6, can be used with similar results. The filter 61, disposed between the amplifier 17 and the SBS mirror 19, further attenuates the ASE. The filter 61 may comprise a broad band filter that has little effect on the input beam or on the conjugate beam but that attenuates other frequencies.

An improved MOPA laser system according to the present invention provides a high-power, low-distortion laser beam. The improved oscillator means reject any of the output beam that may be reflected back toward the oscillator, thereby preventing unwanted oscillation. Attenuation means prevent oscillator degradation by attenuating any ASE that may be generated in the power amplifier and reflected toward the oscillator. Accordingly, the present invention provides a stable MOPA system that can operate at very high power levels without suffering from the unwanted oscillation or oscillator degradation that usually accompany such high-power operation.

## Claims

1. A master-oscillator power-amplifier (MOPA) optical system comprising:
oscillator means (55) to provide along an input path (13) a laser beam having a predetermined frequency;
a beam splitter (15) to receive the beam from the oscillator means (55);
a power amplifier (17) to receive the beam from the beam splitter (15) and amplify the beam;
a phase-conjugating reflector means (18) to reflect the beam back through the amplifier (17) and thence through the beam splitter (15) to provide an amplified output beam along an output path (21); characterized by further comprising
attenuation means(57, 59, 61) for attenuating any spontaneous emissions being amplified by said power amplifier (17), which spontaneous emissions may be transmitted back along the input path (13) toward the oscillator means (55).

2. A MOPA optical system according to Claim 1 wherein the attenuation means (57, 59, 61) comprises a spatial filter (57) disposed along the input path (13) and operative to attenuate said spontaneous emissions.

3. A MOPA optical system according to Claim 1 or 2 wherein the attenuation means (57, 59, 61) comprises an optical isolator (59, 61) to attenuate said amplified spontaneous emissions.

4. A MOPA optical system according to Claim 3 wherein the optical isolator (59, 61) comprises a filter (59) disposed between the oscillator means (55) and the beam splitter (15).

5. A MOPA optical system according to Claim 3 wherein the optical isolator (59, 61) comprises a bandpass filter (61) disposed between the power amplifier and the reflector (18).

6. A MOPA optical system according to Claim 3 wherein the optical isolator (59, 61) comprises a notch filter (61) disposed between the power amplifier and the reflector.

7. A MOPA optical system according to any of the preceeding claims wherein the oscillator means (55) includes a ring oscillator comprising:
an amplifying medium (63) having an input (65) for receiving a forwardly propagating laser beam and operative to amplify the received beam; and
a plurality of reflector means (67, 69, 71) disposed to receive the amplified beam from the medium (63) and operative to reflect the beam forwardly along a ring path (73) around the medium (63) and back into the input (65) for further amplification, one of the reflector means (67) being operative to provide the input beam by transmitting a portion of the amplified beam along the input path (13) toward the beam splitter (15) and to reject any of the output beam that propagates back along the input path (13) by reflecting said output beam away from the input path (13).

8. A MOPA optical system according to Claim 7 wherein the ring oscillator (55) further comprises an optical isolator (79) disposed to receive a beam propagating along the ring path (73) and operative to attenuate that portion of the output beam that propagates back along the input path (13) into the oscillator (59) and thence backwardly around the ring path (73).

9. A MOPA optical system according to Claim 8 wherein the isolator (79) comprises a Bragg cell isolator.

10. A MOPA optical system according to Claim 8 wherein the isolator (79) comprises a magneto-optic "Faraday" isolator.

11. A MOPA optical system according to any of the preceeding claims further comprising:
polarizing means (75, 77) to polarize the input beam; and wherein
said beam splitter (15) is a polarization separating beam splitter;
polarity rotation means (45) to rotate the polarity of the amplified beam; and wherein
said reflector means (18) is a phase conjugate reflector (18) responsive to the rotated beam to provide a beam that is a conjugate thereof and to direct the conjugate beam back through the polarity rotation means (45) whereby the polarity thereof is further rotated to provide a beam having a polarity orthogonal to the polarity of the input beam, back through the amplifier (17), and thence back through the beam splitter (15) to provide an amplified output beam along an output path (21);
said oscillator means (55) including attenuation means (79) operative to reject substantially all of the output beam that propagates back along the input path (13) toward said oscillator means (55).

12. A MOPA optical system according to Claim 2 wherein said spatial filter (57) comprises:
two lenses (81, 83); and
aperture means (85) having therein an aperture (87) and disposed between the lenses (81, 83) whereby a beam propagating along the input path (13) is focused through the aperture (87) by one (83) of the lenses (81, 83) and back onto the input path (13) by the other lens (81).

13. A MOPA optical system according to Claim 4 wherein said filter (59) attenuates any spontaneous emissions reflected toward the oscillator means (55) by the beam splitter (15).

14. A MOPA optical system according to Claim 4 wherein the filter (59) comprises a band pass filter.

15. A MOPA optical system according to Claim 4 wherein the filter (59) comprises a notch filter.

16. A MOPA optical system according to Claim 4 wherein the filter (59) comprises a high pass filter.

17. A MOPA optical system according to Claim 11 wherein said phase conjugate reflector (18) is a SBS phase conjugate mirror reflecting the beam coming from the polarity rotation means (39, 45) such that the reflected beam has a frequency that has been shifted from the predetermined frequency by a shift amount.

18. A MOPA optical system according to Claim 17 wherein said filter (59) being disposed between the oscillator means (55) and the beam splitter (15) is operative to transmit a beam having a frequency equal to that of the input beam and to attenuate a beam having a frequency equal to that of the conjugate beam.

19. A MOPA optical system according to Claim 17 wherein said spatial filter (57) being disposed along the input path (13) is operative to attenuate the amplified spontaneous emissions.

## Patentansprüche

1. Ein optisches System mit einem Leistungsverstärker für den Steueroszillator (MOPA), mit:
Oszillatorvorrichtungen (55), um entlang eines Eingangspfades (13) einen Laserstrahl bereitzustellen, welcher eine vorherbestimmte Frequenz aufweist;
einem Strahlteiler (15), um den Strahl aus den Oszillatorvorrichtungen (55) zu empfangen;
einem Leistungsverstärker (17), um den Strahl von dem Strahlteiler zu empfangen und um den Strahl zu verstärken;
einer phasenkonjugierenden Reflektorvorrichtung (18), um den Strahl zurück durch den Verstärker (17) zu reflektieren und dann durch den Strahlteiler (15), um einen verstärkten Ausgangsstrahl entlang eines Ausgangspfades (21) bereitzustellen; dadurch gekennzeichnet, daß es desweiteren aufweist
Dämpfungsvorrichtungen (57, 59, 61), um alle die spontanen Emissionen zu dämpfen, die von dem Leistungsverstärker (17) verstärkt worden sind, wobei die spontanen Emissionen zurück entlang dem Eingangspfad (13) in Richtung der Oszillatorvorrichtungen (55) transmittiert werden können.

2. Ein MOPA-optisches System nach Anspruch 1, in dem die Dämpfungsvorrichtungen (57, 59, 61) einen Ortsfilter (57) umfassen, der entlang dem Eingangspfad (13) angeordnet ist und der betrieben wird, um die spontanen Emissionen zu dämpfen.

3. Ein MOPA-optisches System nach Anspruch 1 oder 2, in dem die Dämpfungsvorrichtungen (57, 59, 61) einen optischen Isolator (59, 61) umfassen, um die verstärkten spontanen Emissionen zu dämpfen.

4. Ein MOPA-optisches System nach Anspruch 3, in dem der optische Isolator (59, 61) einen Filter (59) umfaßt, der zwischen der Oszillatorvorrichtung (55) und dem Strahlteiler (15) angeordnet ist.

5. Ein MOPA-optisches System nach Anspruch 3, in dem der optische Isolator (59, 61) einen Bandpaßfilter (61) umfaßt, der zwischen dem Leistungsverstärker und dem Reflektor (18) angeordnet ist.

6. Ein MOPA-optisches System nach Anspruch 3, in dem der optische Isolator (59, 61) einen Kerbfilter (61) umfaßt, der zwischen dem Leistungsverstärker und dem Reflektor angeordnet ist.

7. Ein MOPA-optisches System nach einem der vorigen Ansprüche, in dem die Oszillatorvorrichtungen (55) einen Ringoszillator enthalten, mit:
einem verstärkenden Medium (63), welches einen Eingang (65) für den Empfang eines sich vorwärts ausbreitenden Laserstrahles aufweist, und das betrieben wird, um den empfangenen Strahl zu verstärken; und
einer Mehrzahl von Reflektorvorrichtungen (67, 69, 71), welche angeordnet sind, um den verstärkten Strahl aus dem Medium (63) zu empfangen und welche betrieben wer-den, um den Strahl vorwärts entlang eines Ringpfades (73) um das Medium (63) herum und zurück in den Eingang (65) für weitere Verstärkungen zu reflektieren, wobei eine der Reflektorvorrichtungen (67) betrieben wird, um den Eingangsstrahl bereitzustellen, in dem ein Teil des verstärkten Strahles entlang dem Eingangspfad (13) in Richtung des Strahlteilers (15) transmittiert wird, und um den Teil des Ausgangsstrahles zurückzuweisen, der sich zurück entlang dem Eingangspfad (13) ausbreitet, in dem der Ausgangsstrahl von dem Eingangspfad (13) fortreflektiert wird.

8. Ein MOPA-optisches System nach Anspruch 7, in dem der Ringoszillator (55) desweiteren einen optischen Isolator (79) umfaßt, welcher angeordnet ist, um einen Strahl zu empfangen, welcher sich entlang dem Ringpfad (73) ausbreitet, und welcher betrieben wird, um den Teil des Ausgangsstrahles zu dämpfen, der sich entlang des Eingangspfades (13) in den Oszillator (59) und dann rückwärts um den Ringpfad (73) herum ausbreitet.

9. Ein MOPA-optisches System nach Anspruch 8, in dem der Isolator (79) einen Bragg-Zellen-Isolator umfaßt.

10. Ein MOPA-optisches System nach Anspruch 8, in dem der Isolator (79) einen magneto-optischen "Faraday"-Isolator umfaßt.

11. Ein MOPA-optisches System nach einem der vorigen Ansprüche, welches desweiteren aufweist:
Polarisationsvorrichtungen (75, 77), um den Eingangsstrahl zu polarisieren; und worin
der Strahlteiler (15) ein polarisationstrennender Strahlteiler ist;
Polarisations-Rotationsvorrichtungen (45), um die Polarität des verstärkten Strahles zu drehen; und worin
die Reflektorvorrichtung (18) ein phasenkonjugierender Reflektor (18) ist, der auf den gedrehten Strahl anspricht, um einen Strahl bereitzustellen, welcher ein konjugierter davon ist, und um den konjugierten Strahl zurück durch die Polarisations-Rotationsvorrichtungen (45) zu führen, wobei er weitergedreht wird, um einen Strahl bereitzustellen, welcher einen Polarität aufweist, die orthogonal zu der Polarität des Eingangsstrahles ist, und zurück durch den Verstärker (17), und dann zurück durch den Strahlteiler (15), um einen verstärkten Ausgangsstrahl entlang eines Ausgangspfades (21) bereitszustellen;
wobei die Oszillatorvorrichtungen (55) Dämpfungsvorrichtungen (79) enthalten, welche betrieben werden, um im wesentlichen den gesamten Ausgangstrahl zurückzuweisen, welcher sich zurück entlang dem Eingangspfad (13) in Richtung der Oszillatorvorrichtungen (55) ausbreitet.

12. Ein MOPa-optisches System nach Anspruch 2, in dem der Ortsfilter (57) faßt:
zwei Linsen (81, 83);
Aperturvorrichtungen (85), welche eine Apertur (87) in sich aufweisen und welche zwischen den Linsen (81, 83) angeordnet sind, wobei ein Strahl, welcher sich entlang des Eingangspfades (13) ausbreitet, durch die Apertur (87) mittels einer (83) der Linsen (81, 83) fokussiert wird, und dann durch die andere Linse (81) zurück auf den Eingangspfad (13).

13. Ein MOPA-optisches System nach Anspruch 4, in dem der Filter (59) den Teil der spontanen Emissionen dämpft, der in Richtung der Oszillatorvorrichtungen (55) von dem Strahlteiler (15) reflektiert worden ist.

14. Ein MOPA-optisches System nach Anspruch 4, in dem der Filter (59) einen Bandpaßfilter umfaßt.

15. Ein MOPA-optisches System nach Anspruch 4, in dem der Filter (59) einen Kerbfilter umfaßt.

16. Ein MOPA-optisches System nach Anspruch 4, in dem der Filter (59) einen Hochpaßfilter umfaßt.

17. Ein MOPA-optisches System nach Anspruch 11, in dem der phasenkonjugierende Reflektor (18) ein SBS-phasenkonjugierender Spiegel ist, der den von den Polarisations-Rotationsvorrichtungen (39, 45) kommenden Strahl derartig reflektiert, daß der reflektierte Strahl eine Frequenz aufweist, die von der vorherbestimmten Frequenz um einen Verschiebungsbetrag verschoben worden ist.

18. Ein MOPA-optisches System nach Anspruch 17, in dem der Filter (59), welcher zwischen den Oszillatorvorrichtungen (55) und dem Strahlteiler (15) angeordnet ist, betrieben wird, um einen Strahl mit einer Frequenz zu transmittieren, die gleich der des Eingangsstrahles ist, und um einen Strahl zu dämpfen, welcher eine Frequenz aufweist, die gleich der des konjugierten Strahles ist.

19. Ein MOPA-optisches System nach Anspruch 17, in dem der Ortsfilter (57), welcher entlang dem Eingangspfad (13) angeordnet ist, betrieben wird, um die verstärkten spontanen Emissionen zu dämpfen.

## Revendications

1. Système optique à oscillateur pilote et amplificateur de puissance, comprenant :
- des moyens formant oscillateur (55) pour fournir le long d'un trajet d'entrée (13) un faisceau laser ayant une fréquence prédéterminée ;
- un diviseur optique (15) pour recevoir le faisceau issu des moyens formant oscillateur (55) ;
- un amplificateur de puissance (17) pour recevoir le faisceau issu du diviseur optique (15) et amplifier le faisceau ;
- des moyens de conjugaison de phase à réflecteur (18) pour réfléchir le faisceau dans le sens inverse par l'intermédiaire de l'amplificateur (17) et, de là, par l'intermédiaire du diviseur optique (15) pour fournir un faisceau de sortie amplifié le long d'un trajet de sortie (21), caractérisé en ce qu'il comprend en outre :
- des moyens d'atténuation (57, 59, 61) pour atténuer toutes les émissions spontanées amplifiées par ledit amplificateur de puissance (17), lesquelles émissions spontanées peuvent être transmises dans le sens inverse le long du trajet d'entrée (13) vers les moyens formant oscillateur (55).

2. Système optique à oscillateur pilote et amplificateur de puissance selon la revendication 1, dans lequel les moyens d'atténuation (57, 59, 61) comprennent un filtre spatial (57) disposé le long du trajet d'entrée (13) et fonctionnant pour atténuer lesdites émissions spontanées.

3. Système optique à oscillateur pilote et amplificateur de puissance selon là revendication 1 ou 2, dans lequel les moyens d'atténuation (57, 59, 61) comprennent un isolateur optique (59, 61) pour atténuer lesdites émissions spontanées amplifiées.

4. Système optique à oscillateur pilote et amplificateur de puissance selon la revendication 3, dans lequel l'isolateur optique (59, 61) comprend un filtre (59) disposé entre les moyens formant oscillateur (55) et le diviseur optique (15).

5. Système optique à oscillateur pilote et amplificateur de puissance selon la revendication 3, dans lequel l'isolateur optique (59, 61) comprend un filtre passe-bande (61) disposé entre l'amplificateur de puissance et le réflecteur (18).

6. Système optique à oscillateur pilote et amplificateur de puissance selon la revendication 3, dans lequel l'isolateur optique (59, 61) comprend un filtre coupe-bande à bande étroite (61) disposé entre l'amplificateur de puissance et le réflecteur.

7. Système optique à oscillateur pilote et amplificateur de puissance selon l'une des revendications précédentes, dans lequel les moyens formant oscillateur (55) sont constitués par un oscillateur en anneau comprenant :
- un milieu amplificateur (63) ayant une entrée (65) pour recevoir un faisceau laser se propageant dans le sens direct, et fonctionnant pour amplifier le faisceau reçu ; et
- plusieurs moyens formant réflecteurs (67, 69, 71) disposés pour recevoir le faisceau amplifié issu du milieu (63) et fonctionnant pour réfléchir le faisceau dans le sens direct le long d'un trajet en anneau (73) autour du milieu (63) et le ramener à l'entrée (65) pour nouvelle amplification, l'un des moyens formant réflecteurs (67) fonctionnant pour fournir le faisceau d'entrée en transmettant une partie du faisceau amplifié le long du trajet d'entrée (13) vers le diviseur optique (15) et pour rejeter toute partie du faisceau de sortie qui se propage dans le sens inverse le long du trajet d'entrée (13) en réfléchissant ledit faisceau de sortie à partir du trajet d'entrée (13).

8. Système optique à oscillateur pilote et amplificateur de puissance selon la revendication 7, dans lequel l'oscillateur en anneau (55) comprend en outre un isolateur optique (79) disposé pour recevoir un faisceau se propageant le long du trajet en anneau (73) et fonctionnant pour atténuer la partie du faisceau de sortie qui se propage dans le sens inverse le long du trajet d'entrée (13) pour rentrer dans l'oscillateur (59) et, de là, dans le sens inverse autour du trajet en anneau (73).

9. Système optique à oscillateur pilote et amplificateur de puissance selon la revendication 8, dans lequel l'isolateur (79) comprend un isolateur à cellule de Bragg.

10. Système optique à oscillateur pilote et amplificateur de puissance selon la revendication 8, dans lequel l'isolateur (79) comprend un isolateur magnéto-optique "de Faraday".

11. Système optique à oscillateur pilote et amplificateur de puissance selon l'une des revendications précédentes, comprenant en outre :
des moyens de polarisation (75, 77) pour polariser le faisceau d'entrée ; et dans lequel
ledit diviseur optique (15) est un diviseur optique à séparation de polarisations ;
des moyens de rotation de polarisation (45) sont prévus pour faire tourner la polarisation du faisceau amplifié ; et dans lequel
lesdits moyens formant réflecteur (18) sont constitués par un réflecteur à conjugaison de phase (18) sensible au faisceau à polarisation ayant tourné pour fournir un faisceau qui est un conjugué de celui-ci et pour diriger le faisceau conjugué dans le sens inverse vers les moyens de rotation de polarisation (45), ce qui fait que la polarisation de celui-ci est tournée de nouveau pour fournir un faisceau ayant une polarisation orthogonale à la polarisation du faisceau d'entrée, dans le sens inverse, par l'intermédiaire de l'amplificateur (17) et, de là, dans le sens inverse par l'intermédiaire du diviseur optique (15) pour fournir un faisceau de sortie amplifié le long d'un trajet de sortie (21),
lesdits moyens formant oscillateur (55) comportant des moyens d'atténuation (79) fonctionnant pour rejeter sensiblement tout le faisceau de sortie qui se propage dans le sens inverse le long du trajet d'entrée (13) vers lesdits moyens formant oscillateur (55).

12. Système optique à oscillateur pilote et amplificateur de puissance selon la revendication 2, dans lequel ledit filtre spatial (57) comprend :
- deux lentilles (81, 83) ; et
- des moyens formant ouverture (85) ayant dans ceux-ci une ouverture (87) et disposés entre les lentilles (81, 83), ce qui fait qu'un faisceau se propageant le long du trajet d'entrée (13) est focalisé à travers l'ouverture (87) par l'une (83) des lentilles (81, 83) et redirigé vers le trajet d'entrée (13) par l'autre lentille (81).

13. Système optique à oscillateur pilote et amplificateur de puissance selon la revendication 4, dans lequel ledit filtre (59) atténue toutes les émissions spontanées réfléchies vers les moyens formant oscillateur (55) par le diviseur optique (15).

14. Système optique à oscillateur pilote et amplificateur de puissance selon la revendication 4, dans lequel le filtre (59) comprend un filtre passe-bande.

15. Système optique à oscillateur pilote et amplificateur de puissance selon la revendication 4, dans lequel le filtre (59) comprend un filtre coupe-bande à bande étroite.

16. Système optique à oscillateur pilote et amplificateur de puissance selon la revendication 4, dans lequel le filtre (59) comprend un filtre passe-haut.

17. Système optique à oscillateur pilote et amplificateur de puissance selon la revendication 11, dans lequel lesdits moyens formant réflecteur à conjugaison de phase (18) sont constitués par un miroir à conjugaison de phase à diffusion de Brillouin stimulée réfléchissant le faisceau provenant des moyens de rotation de polarisation (39, 45) de telle manière que le faisceau réfléchi ait une fréquence qui a été décalée d'une valeur de décalage à partir de la fréquence prédéterminée.

18. Système optique à oscillateur pilote et amplificateur de puissance selon la revendication 17, dans lequel ledit filtre (59) étant disposé entre les moyens formant oscillateur (55) et le diviseur optique (15) fonctionne pour transmettre un faisceau ayant une fréquence égale à celle du faisceau d'entrée et pour atténuer un faisceau ayant une fréquence égale à celle du faisceau conjugué.

19. Système optique à oscillateur pilote et amplificateur de puissance selon la revendication 17, dans lequel ledit filtre spatial (57) étant disposé le long du trajet d'entrée (13) fonctionne pour atténuer les émissions spontanées amplifiées.
